Europäisches Patentamt

European Patent Office

Office européen des brevets

(11) Veröffentlichungsnummer: **0 031 293**
**B1**

# (12) EUROPÄISCHE PATENTSCHRIFT

(45) Veröffentlichungstag der Patentschrift:
06.06.84

(51) Int. Cl.³: **H 02 G 15/105, H 02 G 15/068**

(21) Anmeldenummer: 80730074.4

(22) Anmeldetag: 21.11.80

(54) **Kabelgarnitur mit elastischem Isolierkörper und metallischem Gehäuse.**

(30) Priorität: 20.12.79 DE 2951727

(43) Veröffentlichungstag der Anmeldung:
01.07.81 Patentblatt 81/26

(45) Bekanntmachung des Hinweises auf die Patenterteilung:
06.06.84 Patentblatt 84/23

(84) Benannte Vertragsstaaten:
AT CH FR GB IT LI

(56) Entgegenhaltungen:
DE - A - 2 121 498
DE - A - 2 319 137
DE - A - 2 726 402
DE - A - 2 732 268
DE - U - 7 936 121

(73) Patentinhaber: SIEMENS AKTIENGESELLSCHAFT,
Berlin und München Wittelsbacherplatz 2,
D-8000 München 2 (DE)

(72) Erfinder: Goehlich, Lothar, Westphalweg 16B,
D-1000 Berlin 42 (DE)
Erfinder: Kretschmer, Klaus, Am Rupenhorn 6a,
D-1000 Berlin 19 (DE)

## Beschreibung

Die Erfindung liegt auf dem Gebiet der Garnituren für kunststoffisolierte elektrische Kabel und ist bei der konstruktiven Ausgestaltung von vorgefertigten Garnituren oder Garniturenteilen mit einem elastischen Isolierkörper und metallischem Gehäuse anzuwenden.

Für kunststoffisolierte Mittel- und Hochspannungskabel, insbesondere für solche mit einer Isolierung aus thermoplastischem oder vernetztem Polyäthylen, sind in neuerer Zeit Garnituren und Garniturenteile entwickelt worden, die auf das entsprechend vorbereitete Kabelende aufgeschoben werden oder in die entsprechend zubereitete Kabelenden eingesteckt werden. Diese Garnituren und Garniturenteile bestehen im wesentlichen aus einem elastischen Isolierkörper aus einem Äthylen-Propylen-Terpolymerkautschuk oder Silikonkautschuk und sind mit Elementen zur Steuerung des elektrischen Feldes versehen. Ihre Innenbohrung ist kleiner als der Außendurchmesser der jeweils zubereiteten Kabelader. Beim Aufschieben auf die Kabelader oder beim Einstecken eines Kabelendes werden die Garniturenteile so weit elastisch gedehnt, daß sich ein hohlraumfreier Preßsitz auf der Aderisolierung ergibt. Durch den Preßsitz ist gleichzeitig eine Abdichtung gegen Feuchtigkeit gegeben. Um derartige Garnituren und Garniturenteile im übrigen berührungssicher auszubilden oder um eine metallische Durchverbindung der Kabelschirme zu ermöglichen, hat man auch vorgesehen, die elastischen Isolierkörper mit einem rohrförmig ausgestalteten metallischen Gehäuse zu umgeben (DE-OS 2 726 402).

Die Erfindung geht von der Erkenntnis aus, daß bei derartigen Garnituren und Garniturenteilen der Preßsitz des Isolierkörpers auf der jeweiligen Kabelader zwar auch eine Abdichtung im Bereich der Kabeleinführung gewährleistet, daß diese Abdichtung aber bei Biegungen des Kabels gefährdet ist; das zylindrisch ausgebildete Ende des Isolierkörpers kann nämlich solchen Biegungen nicht folgen, sondern wird deformiert.

Ausgehend von einer Garnitur für kunststoffisolierte elektrische Kabel, die aus einem elastischen, vorgefertigten, mit einer Bohrung versehenen und gegebenenfalls ein Verbindungselement enthaltenden Isolierkörper besteht, der wenigstens ein zylindrisch ausgebildetes Ende mit innen eingebettetem Steuerdeflektor aus elastomerem Material aufweist und der von einem metallischen Gehäuse umgeben ist, liegt der Erfindung demgemäß die Aufgabe zugrunde, die Garnitur konstruktiv so auszugestalten, daß auch bei Biegungen des Kabels im Bereich der Kabeleinführung ein dichtes Anliegen des Isolierkörpers an der Kabelader gewährleistet ist.

Zur Lösung dieser Aufgabe ist gemäß der Erfindung vorgesehen, daß in das zylindrisch ausgebildete Ende des Isolierkörpers stirnseitig eine kreisförmige Nut konzentrisch zur Achse des Isolierkörpers eingelassen ist, deren Tiefe etwa der Länge des zylindrischen Fußteiles des Steuerdeflektors entspricht.

Durch die gemäß der Erfindung vorgesehene Nut wird das den Steuerdeflektor umfassende Teil des Isolierkörpers so ausgebildet, daß es in einen mechanisch wirksamen und elektrisch wirksamen Bereich getrennt ist, wobei die Trennung der beiden Bereiche durch eine bewegliche Zone erfolgt. Der mechanisch wirksame Bereich ist beweglich und kann somit eventuellen Biegungen des Kabels elastisch folgen, ohne den fest im metallischen Gehäuse gehaltenen elektrisch wirksamen Bereich mechanisch zu beeinflussen. Der mechanisch wirksame, bewegliche Bereich des Isolierkörpers ist dabei im übrigen durch die kreisförmige Nut so gestaltet, daß er bei einer von außen anstehenden Flüssigkeit von dieser Flüssigkeit umgeben wird. Bei erhöhtem Flüssigkeitsdruck ergibt sich damit eine selbstverstärkende Wirkung der Abdichtung.

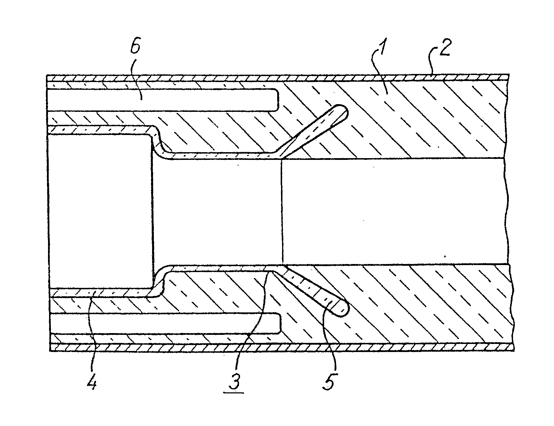

Ein Ausführungsbeispiel der neuen Kabelgarnitur ist in der Figur dargestellt.

Die Figur zeigt das Ende eines Muffenkörpers, der im wesentlichen aus dem elastischen Isolierkörper 1 und dem diesen Isolierkörper umgebenden metallischen Gehäuse 2 besteht. Das Gehäuse 2 kann dabei unter Verwendung axial verlaufender Schlitze radial elastisch ausgestaltet sein.

In das zylindrische Ende des Muffenkörpers 1 ist innen der Steuerdeflektor 3 aus elektrisch leitendem, elastischem Material eingebettet. Der Steuerdeflektor besteht dabei aus einem zylindrischen, mit einem Absatz versehenen Fußteil 4 und dem konisch verlaufenden Teil 5. Zwischen dem Fußteil 4 des Steuerdeflektors 3 und dem metallischen Gehäuse 2 ist stirnseitig in den Isolierkörper 1 konzentrisch zur Achse des Isolierkörpers die kreisförmige Nut 6 eingelassen, deren Tiefe etwa der Länge des zylindrischen Fußteiles 4 entspricht. Durch die Nut 6 ist der Querschnitt des Isolierkörpers 1 im Bereich des Fußteiles 4 geschwächt, so daß das innerhalb der kreisförmigen Nut 6 liegende Teil des Isolierkörpers 1 beweglich ist. Dieses die Kabeleinführung bildende Teil kann bei Biegungen des Kabels nach Maßgabe der Nutbreite den Biegungen folgen, ohne den Preßsitz des Isolierkörpers 1 auf der jeweiligen Kabelader sowohl im konischen Bereich des Steuerdeflektors 3 als auch im Bereich des Fußteiles 4 zu gefährden.

## Patentanspruch

Garnitur für kunststoffisolierte elektrische Kabel, insbesondere für Mittel- und Hochspannungskabel, bestehend aus einem elastischen, vorgefertigten, mit einer Bohrung versehenen und gegebenenfalls ein Verbindungselement enthaltenden Isolierkörper (1), der wenigstens ein zylindrisch ausgebildetes Ende mit innen eingebettetem Steuerdeflektor (3) aus elastomerem Material aufweist und der von einem metallischen Gehäuse (2) umgeben ist, dadurch gekennzeichnet, daß in das zylindrisch ausgebildete Ende des Isolierkörpers (1) stirnseitig eine kreisförmige Nut (6) konzentrisch zur Achse des Isolierkörpers eingelassen ist, deren Tiefe etwa der Länge des zylindrischen Fußteiles (4) des Steuerdeflektors entspricht.

## Claim

A fitting for a synthetic resin-insulated electric cable, in particular for middle- and high-voltage cables, consisting of an elastic, pre-formed insulating body (1) which is provided with a bore and may contain a connecting element, which has at least one cylindrical end with an internally embedded control deflector (3) made of elastomeric material, and which is surrounded by a metallic housing (2), characterized in that a circular groove (6) is let into the cylindrical end of the insulating body (1) at its front face concentric to the axis of the insulating body, the depth of which groove corresponds approximately to the length of the cylindrical foot portion (4) of the control deflector.

## Revendication

Garniture pour des câbles électriques isolés par une matière synthétique, notamment pour des câbles à moyenne et haute tension, constituée par un corps isolant (1) élastique préfabriqué, muni d'un perçage et contenant éventuellement un élément d'accouplement, qui comporte au moins une extrémité de forme cylindrique avec un déflecteur de commande (3) en un matériau élastomère encastré à l'intérieur et qui est entouré d'une enveloppe métallique (2), caractérisée par le fait que dans l'extrémité de forme cylindrique du corps isolant (1) est ménagée frontalement et concentriquement par rapport à l'axe du corps isolant, une gorge circulaire (6) dont la profondeur correspond sensiblement à l'embase cylindrique (4) du déflecteur de commande.